# EUROPEAN PATENT SPECIFICATION

(11) **EP 2 613 955 B1**
(45) Date of publication and mention of the grant of the patent: **11.01.2017**
(21) Application number: 11752476.9
(22) Date of filing: 29.08.2011
(51) Int. Cl.: B60K 15/03

(54) **FUEL TANK MADE OF THERMOPLASTIC MATERIAL**
KRAFTSTOFFTANK AUS THERMOPLASTISCHEM MATERIAL
RÉSERVOIR DE CARBURANT EN MATÉRIAU THERMOPLASTIQUE

(30) Priority: 07.09.2010 DE 102010044584
(43) Date of publication of application: 17.07.2013
(73) Proprietor: Kautex Textron GmbH & Co. KG, 53229 Bonn (DE)
(72) Inventor: HELMIG, Raimund, 53225 Bonn (DE); KARSCH, Ulrich, 53859 Niederkassel (DE); LEHMANN, Harald, 53340 Meckenheim (DE)
(74) Representative: Kierdorf Ritschel Richly
(86) International application number: PCT/EP2011/004329
(87) International publication number: WO 2012/031705

(56) References cited:
- WO-A1-94/12334
- WO-A1-2007/093006
- US-A- 5 194 212

## Description

The invention concerns a fuel tank made of thermoplastic material.

Known plastic fuel tanks for motor vehicles are formed as fuel tanks based on polyethylene (HDPE). These usually have a multilayered wall structure with barrier layers for hydrocarbons. Plastic fuel tanks have the advantage over metal fuel tanks that they can be produced with a spatially relatively complex design and have sufficient shape retention and stability. Plastic fuel tanks undergo standardized drop tests, in which filled tanks are dropped from a height of several metres at relatively low ambient temperatures. Short-term deformations of the fuel tanks in the event of a crash or in the case of such drop tests do not generally lead to any permanent changes in contour of the tanks. Even when the internal pressure is increased for a short time, fuel tanks made of plastic retain their shape to the greatest extent, at least such that they resume their original shape when the pressure subsides.

Fuel tanks that are designed at least predominantly for use in motor vehicles with internal combustion engines are usually connected to the surroundings through the venting system by way of an active carbon filter, so that the fuel tank is pressureless in all the operating states of the motor vehicle.

In the case of motor vehicles that can be driven not only by an internal combustion engine but also by battery-operated electric motors, pressureless operation of the fuel tank is not feasible, since the internal combustion engine of the motor vehicle is not operated for relatively long periods of time. The fuel vapour filter by which the fuel tank communicates with the surroundings is usually backflushed while the internal combustion engine of the motor vehicle is in operation, in that the air required for the engine is taken in via the fuel vapour filter during the operating phases of the engine. The adsorption capacity of the fuel vapour filter is designed correspondingly.

In the case of modern hybrid vehicles, on the other hand, the number of operating cycles and the operating time of the internal combustion engine are greatly reduced. Consequently, the number and duration of the possible backflushing cycles of the fuel vapour filter are likewise restricted. This requires corresponding dimensioning of the fuel vapour filter, which is often subject to limits owing to installation space. For this reason, fuel tanks for hybrid vehicles are often sealed off from the atmosphere in such a way that pressure fluctuations with respect to the atmosphere of approximately + 400 mbar to - 150 mbar can occur in the fuel tank. It is intended that this pressure difference with respect to the atmosphere can be maintained as far as possible over relatively long periods of time. In this connection, the stabilization of fuel tanks based on polyethylene assumes particular importance. Polyethylene has the characteristic that, if subjected to sustained pressure and/or tension, it flows even at room temperatures, and so allowance must be made for this by a correspondingly stable/thick-walled design of the fuel tank.

In the prior art there are known fuel tanks in which supporting elements are inserted in the tank in such a way that they mutually support the larger-area tank wall regions (wide sides) of the tank and fix them in relation to one another. Such supporting measures are less desirable, in particular because of the accompanying reduction in volume of the fuel tank. In addition, such reinforcing/supporting elements cannot be arranged in whatever manner desired inside the tank, since under some circumstances they may collide with necessary internals such as surge tanks, filling level sensors, suction jet pumps, aerating and venting valves or aerating and venting lines.

Also known in principle are measures which stiffen the tank by the functional internals that have to be provided therein in any case, such as for example surge tanks or baffle rings. Experience shows that such stabilizing measures do not achieve satisfactory results under all circumstances, especially since they do not affect the tendency to creep of the plastic. In addition, stiffening of the overall system is less desirable in respect of accident-related collision loads.

US 5,020,687 discloses an extrusion blow-moulded fuel tank with fabric inserts moulded into the tank wall, with the intention of improving both the stiffness of the tank and the fire resistance of the same. An improvement in stiffness is intended to be obtained in a way conducive to reducing the wall thickness and lowering the weight. The porous fabric that is used is intended to enter into a material bond and/or interlocking connection with the tank and is integrated in the tank wall in such a way that it is not inserted in the tank wall in a projecting or obtrusive manner.

Apart from the fact that the reinforcing fabric serves primarily for fire resistance, it contributes only moderately to increasing the internal pressure resistance of the tank.

A fiber reinforced structure according to the preamble of claim 1 of the instant application is for instance disclosed in US patent No. 5,194,212.

According to the method for manufacturing the fiber reinforced structure, bulk fibrous material is dispensed between two die pieces of a mold. A blow-moldable plastic parison is extruded within the fibrous material. The mold is closed, pinching the parison closed and detaching the bulk fibrous material from the structure. The parison is inflated, thus forcing the fibrous material against the interior mold walls.Liquid resin is injected into the mold and impregnates the fibrous material.

WO 94/12334 discloses a process for molding composite plastic objects, such as fuel tanks. In one version, a reinforcing mesh of a high-tensile strength is laid on an inside surface of a mold. A parison is introduced into the mold or blown to force its thermoplastic through the mesh against the inside of the mold, embedding and mechanically interlocking the mesh into the thermoplastic wall of the blow molded object.

WO 2007/093006 A1 discloses an article manufactured in a mold and which comprises a structural composite of plastic layers, the article having a wall defining an internal space for holding components therein, wherein the wall is formed from at least two layers of plastics materials, wherein a first of said layers comprises a thermoplastic material, and at least a second layer comprises a thermosetting resin and a fibrous layer. The article, preferably a storage vessel, is being manufactured from a matrix of dual thermoplastic and thermoset resins. A fibrous reinforcing layer is interposed between a first layer of thermoplastic material and a second layer of thermosetting resin. The method comprises the steps of heating the thermoplastics layer sufficient to morph from a solid to a flowable state, and allowing the first thermoplastic layer to flow at least partway through the thickness of the at least one fibrous layer. After this first layer has been cooled, a thermosetting resin is applied to the fibrous layer such that the first layer forms a second cover layer and such that the first layer is bonded with the second layer.

The invention is based on the object of providing a fuel tank made of thermoplastic material that is effectively stabilized against increased internal pressure by relatively simple means. The object is achieved by a fuel tank according to claim 1 of the instant application.

Depending on the expected tensile and/or flexural stressing in the fuel tank, one or more reinforcing elements may be provided. In the case of a preferred variant of the fuel tank according to the invention, the stiffening element has at least one through-opening, which is penetrated, and preferably engaged behind, by the base material of the tank wall.

If the fuel tank according to the invention is produced by extrusion blow-moulding or a comparable process, the stiffening element may have already been placed in the cavity of the moulding tool before the preform is introduced into the moulding tool, and so the molten-hot polymer forming the tank wall passes through the through-opening or multiple through-openings of the stiffening element when the preform is introduced.

The stiffening element expediently has multiple through-openings, which are passed through by the base material of the tank wall in such a way that individual fastening points of the stiffening element to the tank wall are formed in the manner of a riveted connection. At the same time, the stiffening element may have additionally undergone a material bond with the tank wall, either by using compatible materials or by using a bonding agent.

Fiber composite materials are so-called pre-preg fiber panels with, for example, continuous glass, carbon, aramid, thermoset or natural fibers. "Pre-pregs" (preimpregnated fibers) are generally semifinished products consisting of continuous fibers in an uncured thermosetting polymer matrix. The continuous fibers may take the form of a pure unidirectional layer, a woven fabric or a laid structure. For example, such pre-pregs may be placed in the tool as webs of woven fabric and fixed there. These then bond with the base material of the preform in a suitable manner when the molten-hot preform is introduced into the tool.

The stiffening element consists of a fiber material in a thermosetting polymer matrix.

A heat-curable plastic is used with particular preference as the thermosetting plastic, preferably a plastic based on epoxy resin. If the plastic tank according to the invention is produced by extrusion blow-moulding, it is preferred to use such pre-pregs with a matrix of a heat-curable thermosetting plastic that the stiffening element placed in the mould cures in contact with the molten-hot preform, the heat required for the curing being introduced into the stiffening element by contact heat transfer from the preform.

In the case of an expedient, preferred embodiment of the fuel tank according to the invention, multiple sheet-like stiffening elements are provided on the outer tank wall in regions of likely tensile and/or flexural stressing in the tank wall.

In the case of a preferred variant of the fuel tank according to the invention, the stiffening element is not completely enclosed in the base material of the tank wall, and so, at least in certain regions, the stiffening element increases the thickness of the tank wall in the stabilized region of the tank.

The invention is explained below on the basis of an exemplary embodiment that is represented in the drawings, in which:
- Figure 1: shows a schematic sectional view through a blow-moulding tool, a stiffening element placed therein and part of a preform introduced into the blow-moulding tool, as an exploded view directly before the connection of the tank wall of the preform to the stiffening element and
- Figure 2: shows a view corresponding to Figure 1 with the at least partially moulded fuel tank, with the stiffening element connected to the tank wall still in the tool.

For reasons of simplicity, the fuel tank according to the invention is not represented in the drawings. The finished fuel tank is formed in one piece from thermoplastic material and was preferably obtained by extrusion blow-moulding. For example, the fuel tank according to the invention may have been obtained by extruding a tubular, multilayered preform which has been divided at diametrically opposite points into two sheet-like semifinished products or from two extruded sheet-like preforms in web/strip form, which have been moulded into a closed hollow body in a multi-part, preferably three-part, blow-moulding tool in the first heat of the extrudate. During the production of the fuel tank from thermoplastic material, the required functional internals of the fuel tank may have been integrated in it during the moulding of the fuel tank. The fuel tank may have been produced from an altogether six-layered co-extrudate of thermoplastic material based on HDPE with at least one barrier layer for hydrocarbons.

For the purposes of the invention, a pressure tank should be understood as meaning a fuel tank which can be hermetically sealed off from the atmosphere and is designed for pressure fluctuations of + 400 mbar to - 150 mbar internal pressure with respect to atmospheric pressure over a relatively long period of time.

The production took place, for example, by introducing two sheet-like extrudates in web form as preforms into a three-part blow-moulding tool with two outer moulds and a central mould, the outer moulds forming the component parts of the tool that shape the finished article.

The fuel tank according to the invention comprises one or more stiffening elements 1, which in the case of the exemplary embodiments described are formed as sheet-like perforated plates with through-openings 2.

Stiffening elements 1 are provided on the outside of the tank wall of the finished fuel tank at all points at which increased material stresses in the material may occur as a result of pressure differences in the fuel tank.

In the case of the embodiment represented, which does not form part of the invention, the stiffening element shown is formed as a perforated aluminium plate. This comprises in the region of a number of material webs between the through-openings 2 projections 3, which can be inserted into correspondingly formed depressions 4 in the tool 5. The depressions 4 in the tool 5 serve as positioning aids for the stiffening element 1. As an alternative to the depressions 4, it is possible to provide, for example, magnets or similar attaching elements, which interact with correspondingly magnetizable regions of the stiffening element 1 for the purpose of fixing the latter. However, the fixing of the stiffening elements 1 may also take place, for example, by means of a vacuum.

The through-openings 2 in the stiffening element 1 are respectively widened on both sides in a funnel-shaped manner, in order to make it easier for the molten-hot polymer that forms the base material for the fuel tank to pass through, in such a way that the penetration of the molten-hot polymer through the through-openings 2 is facilitated and flowing behind the stiffening element 1 in the sense of an interlocking anchorage is achieved.

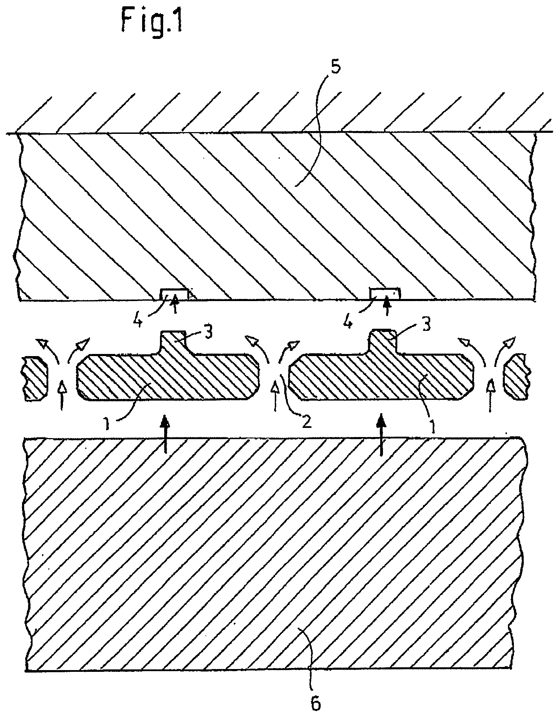

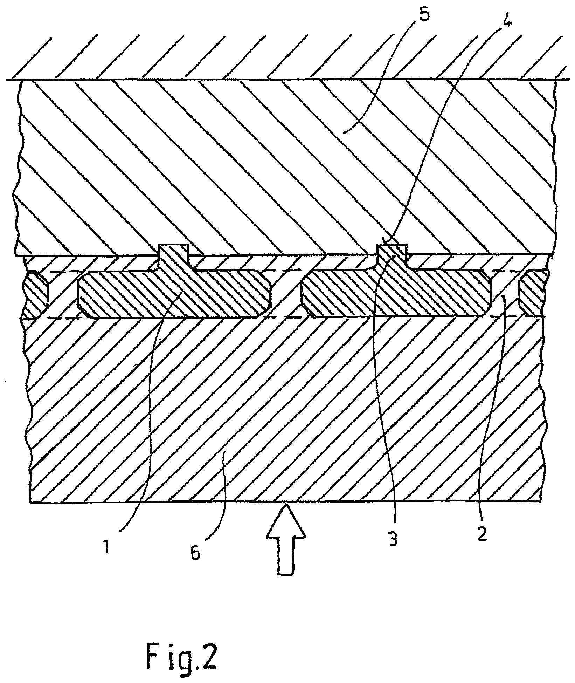

In the case of the relatively large-area stiffening element 1, through-openings 2, such as are represented for example in Figures 1 and 2, may merely be provided in the edge regions or corner regions of the stiffening element 1.

As intimated in the figures, first the stiffening element 1 is placed in the tool 5. Then a molten-hot preform 6 is introduced into the tool 5 and moulded by differential pressure within the tool 5 against the stiffening element placed in the tool 5. The warm-plastic material of the preform thereby penetrates and engages behind the through-openings 2 in the stiffening element in such a way that the stiffening element 1 is partially flowed behind. During the curing of the plastic of the preform 6, an interlocking engagement with the stiffening element 1 is established, formed in the region of the through-openings 2 in the manner of a riveted connection.

### List of designations

- 1: Stiffening element
- 2: Through-openings
- 3: Projections
- 4: Depressions
- 5: Tool
- 6: Preform

## Claims

1. Fuel tank made of thermoplastic material with at least one sheet-like stiffening element (1) which is connected to the tank wall, consists of material that has a higher modulus of elasticity than the base material of the fuel tank and which is connected to the fuel tank with interlocking engagement on the outer side thereof, the stiffening element (1) consisting of a fiber composite material, **characterized in that** the stiffening element comprises a fiber material in a thermosetting polymer matrix in the form of a pre-preg fiber panel.

2. Fuel tank according to Claim 1, **characterized in that** the stiffening element (1) has at least one through-opening (2), which is penetrated, and preferably engaged behind, by the base material of the tank wall.

3. Fuel tank according to one of Claims 1 or 2, **characterized in that** a heat-curable plastic, preferably based on epoxy resin, is provided as the thermosetting plastic.

4. Fuel tank according to Claims 1 to 3, **characterized in that** multiple sheet-like stiffening elements (1) are provided on the outer tank wall in the region of likely tensile stresses and/or flexural stresses in the tank wall.

5. Fuel tank according to one of Claims 1 to 4, **characterized in that** the stiffening element (1) is not completely enclosed by the base material of the outer tank wall.

## Patentansprüche

1. Kraftstoffbehälter aus thermoplastischem Kunststoff mit wenigstens einem flächigen Versteifungselement (1), welches mit der Behälterwand verbunden ist, welches aus einem Werkstoff besteht, der ein höheres Elastizitätsmodul als der Grundwerkstoff des Kraftstoffbehälters aufweist und welches auf der Außenseite des Kraftstoffbehälters mit diesem formschlüssig verbunden ist, wobei das Versteifungselement (1) aus einem Faserverbundwerkstoff besteht, **dadurch gekennzeichnet, dass** das Versteifungselement einen Faserwerkstoff in einer duroplastischen Kunststoffmatrix in Form eines Pre-Preg-Blechs umfasst.

2. Kraftstoffbehälters nach Anspruch 1, **dadurch gekennzeichnet, dass** das Versteifungselement (1) wenigstens eine Durchtrittsöffnung (2) aufweist, die von dem Grundwerkstoff der Behälterwand durchdrungen und vorzugsweise hintergriffen wird.

3. Kraftstoffbehälter nach einem der Ansprüche 1 oder 2, **dadurch gekennzeichnet, dass** als duroplastischer Kunststoff ein wärmeaushärtbarer Kunststoff, vorzugsweise auf Epoxidharz-Basis vorgesehen ist.

4. Kraftstoffbehälter nach einem der Ansprüche 1 bis 3, **dadurch gekennzeichnet, dass** mehrere flächige Versteifungselemente (1) auf der Behälteraußenwandung im Bereich zu erwartender Zugspannungen und/oder Biegespannungen der Behälterwandung vorgesehen sind.

5. Kraftstoffbehälter nach einem der Ansprüche 1 bis 4, **dadurch gekennzeichnet, dass** das Versteifungselement (1) nicht vollständig vom Grundwerkstoff der äußeren Behälterwand eingeschlossen ist.

## Revendications

1. Réservoir de carburant fabriqué en matériau thermoplastique avec au moins un élément de rigidification de type feuille (1) qui est connecté à la paroi du réservoir, qui est constitué d'un matériau ayant un module d'élasticité supérieur au matériau de base du réservoir de carburant et qui est connecté au réservoir de carburant par engagement par emboîtement sur le côté extérieur de celui-ci, l'élément de rigidification (1) étant constitué d'un matériau composite renforcé par des fibres, **caractérisé en ce que** l'élément de rigidification comprend un matériau renforcé par des fibres dans une matrice polymère thermodurcissable sous la forme d'un panneau de fibres préimprégné.

2. Réservoir de carburant selon la revendication 1, **caractérisé en ce que** l'élément de rigidification
(1) présente au moins une ouverture traversante
(2) qui est traversée, de préférence par engagement par l'arrière, par le matériau de base de la paroi du réservoir.

3. Réservoir de carburant selon l'une des revendications 1 et 2, **caractérisé en ce qu'**un plastique durcissant à la chaleur, de préférence à base de résine époxy, est fourni en tant que plastique thermodurcissable.

4. Réservoir de carburant selon les revendications 1 à 3, **caractérisé en ce que** plusieurs éléments de rigidification de type feuille (1) sont prévus sur la paroi extérieure du réservoir dans la région des contraintes de traction et/ou des contraintes de flexion probables dans la paroi du réservoir.

5. Réservoir de carburant selon l'une des revendications 1 à 4, **caractérisé en ce que** l'élément de rigidification (1) n'est pas complètement enfermé par le matériau de base de la paroi extérieure du réservoir.
